# EUROPEAN PATENT APPLICATION

(11) **EP 0 803 806 A2**
(43) Date of publication of application: **29.10.1997**
(21) Application number: 97302327.8
(22) Date of filing: 04.04.1997
(51) Int. Cl.: G06F 9/45, G06F 9/44

(54) **Data conversion mechanism for computer system**

(30) Priority: 23.04.1996 GB 9608345
(71) Applicant: INTERNATIONAL COMPUTERS LIMITED, Putney, London, SW15 1SW (GB)
(72) Inventor: Jones, Gary Wayne, Runcorn, Cheshire WA7 6AA (GB)
(74) Representative: Guyatt, Derek Charles

(57) **Abstract**

A computer system comprises first and second software components, such as for example TUXEDO software and a Visual Basic application. A first data structure definition file (e.g. a C header file) represents a data structure from the point of view of the first software component. A software tool processes the first data structure to generate a second structure definition file (e.g. Visual Basic Types) representing the data structure from the point of view of the second software component, and at the same time to generate a compact coded representation of the data structure. A conversion function is provided, for converting an instance of the data structure represented by the first structure definition file into an instance of the data structure represented by the second structure definition file, and vice versa, using the compact coded representation to control the conversion.

## Description

### Background to the Invention

This invention relates to computer systems. More specifically, the invention is concerned with a data conversion mechanism for use in such a system.

In a computer system, it is sometimes necessary to pass data between different software components written in different computer languages. For example, it may be desired to pass data between a C language application such as TUXEDO, and a Visual Basic application.

(TUXEDO is a registered trademark of UNIX System Laboratories Inc, a wholly owned subsidiary of Novell Inc.)

A problem with this is that, in general, software components written in different languages expect different data formats. In the above example, TUXEDO will expect data in the form of C structures, while the Visual Basic application will expect data in the form of Visual Basic Types. The format of data within a Visual Basic Type is different from that of a C structure: for example, strings are held differently.

The object of the present invention is to provide a convenient and efficient mechanism for converting data between different data types.

### Summary of the Invention

According to the invention there is provided a computer system comprising;
(a) first and second software components;
(b) a first data structure definition file, representing a data structure from the point of view of said first software component;
(c) means for processing the first structure definition file to generate a second structure definition file representing said data structure from the point of view of said second software component, and at the same time to generate a compact coded representation of said data structure; and
(d) conversion means for converting an instance of said data structure represented by said first structure definition file into an instance of said data structure represented by said second structure definition file, and vice versa, using said compact coded representation to control the conversion.

### Brief Description of the Drawings

Figure 1 is a block diagram of a computer system including a data conversion mechanism in accordance with the present invention.

Figure 2 is a flowchart showing a type compiler forming part of the data conversion mechanism.

Figure 3 is a flowchart showing a conversion function forming part of the data conversion mechanism.

### Description of an Embodiment of the Invention

One data conversion mechanism in accordance with the invention will now be described by way of example with reference to the accompanying drawings.

### Overall view of the system

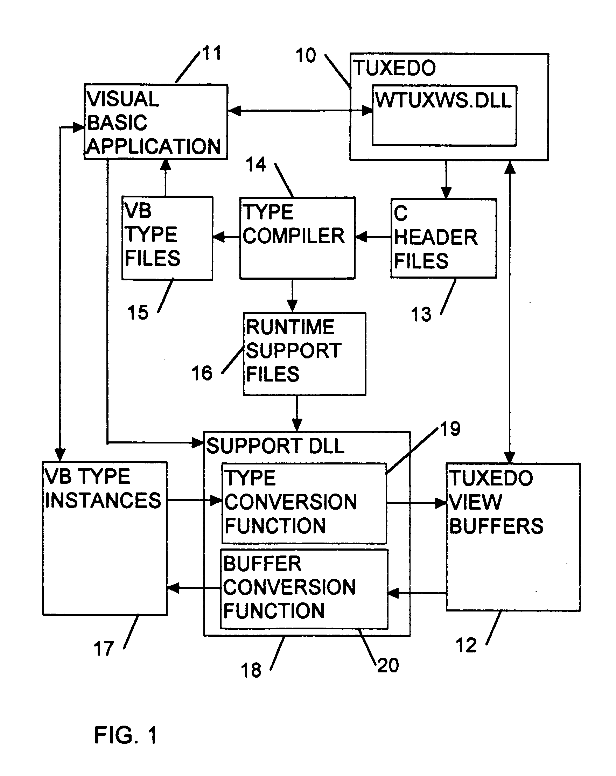

Referring to Figure 1, this shows a computer system including two software components 10, 11. In this example, the first component 10 comprises the known TUXEDO software, including the dynamic linked library (DLL) called wtuxws.dll. The second component is a Visual Basic application. The Visual Basic application 11 makes function calls to the TUXEDO software 10. Some of the called functions return pointers, while others take pointers as parameters and update these pointers.

The TUXEDO software 10 uses typed buffers, including a set of VIEW buffers 12, each of which is essentially a C structure. The software 10 generates one or more C header files 13 each containing one or more C structure declarations. Each of these C structure declarations defines the structure of a particular VIEW buffer.

The system includes a type compiler 14, which processes the C header files 13 and, for each header file, produces two files: a Visual Basic Type file 15 and a runtime support file 16. The Visual Basic Type file 15 contains a corresponding Visual Basic Type for each of the C structures in the C header file, while the runtime support file 16 contains a compact coded representation for each Visual Basic Type.

Initially, the type compiler 14 is called to generate a Visual Basic Type file for each C header file containing C structure declarations, for each C structure (i.e. in this example, each VIEW buffer) in use. As will be described, these Visual Basic Type files are used by the Visual Basic application to create a set of Visual Basic Type instances 17, which the application can manipulate directly.

The system also includes a runtime support DLL 18, containing a type conversion function 19 and a buffer conversion function 20. The type conversion function 19 copies a specified Visual Basic Type instance 17 to a specified VIEW buffer 12, performing any necessary data conversions to take account of differences in the way data is stored. Conversely, the buffer conversion function 20 copies a specified VIEW buffer 12 to a specified Visual Basic Type instance 17, performing any necessary data conversions. Both of these functions make use of the compact coded representation held in the runtime support file 16 to facilitate the conversions.

### Type compiler.

The type compiler 14 is a tool which takes as its input a C header file containing one or more C structure declarations and produces two output files: a Visual Basic Type file and a runtime support file. The Visual Basic Type file and the runtime support file are saved in files with the same name as the C header file, but with the extensions ".txt" and ".tvb" respectively.

For example, a C header file "Customer.h" might contain the following C structure declaration:

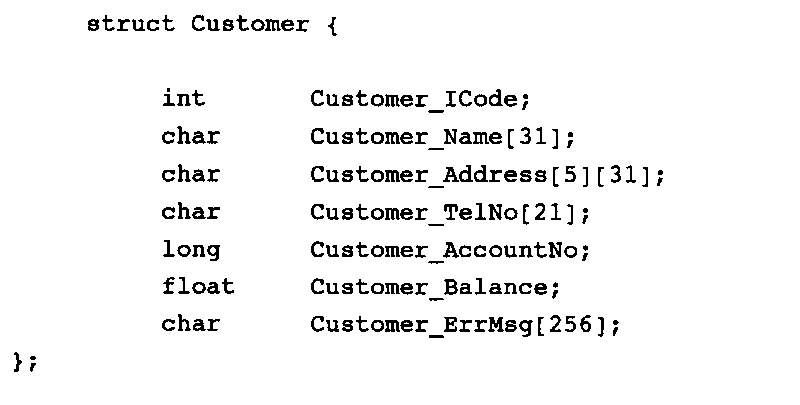

The corresponding Visual Basic Type file "Customer.txt" generated by.the type compiler would be as follows:

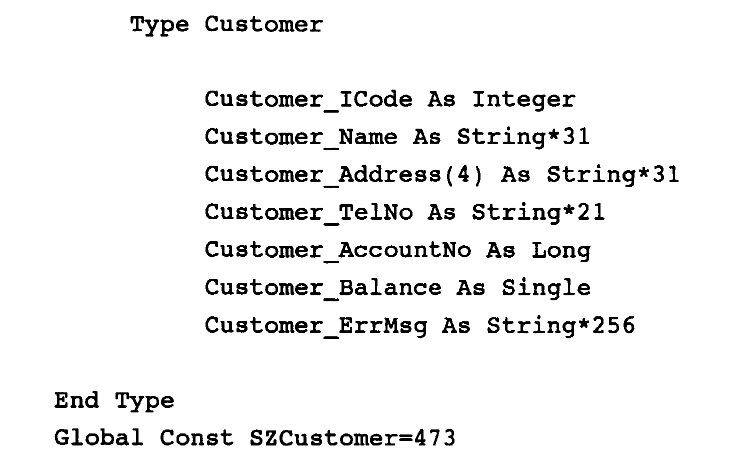

The global constant SZCustomer is the size of the Visual Basic Type and the equivalent C structure, in bytes.

The runtime support file generated by the type compiler consists of a sequence of entries, one for each Visual Basic Type. Each entry has the following format:

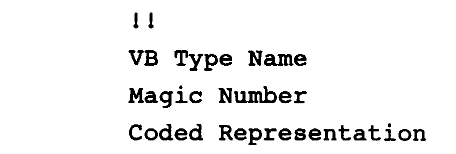

The field !! indicates the start of the entry. VB Type name is the name of the Visual Basic Type, as a NULL-terminated string. Magic Number is a check code, the same Magic Number being used for all entries in the runtime support file. The Coded Representation consists of a sequence of information items, each item consisting of a Type Code and, optionally, Type Data.

The Type Code indicates the Visual Basic Type, as follows:
- 0: Integer
- 1: Integer (Array)
- 2: Long
- 3: Long (Array)
- 4: String
- 5: String (Array)
- 6: Single
- 7: Single (Array)
- 8: Double
- 9: Double (Array)

The optional Type Data is used only for String and Array entries. For an Array, it represents the size of each array dimension. For a String, it is the length of the string.

In the example given above, the type compiler generates a runtime support file "Customer.tvb" including the following entry:

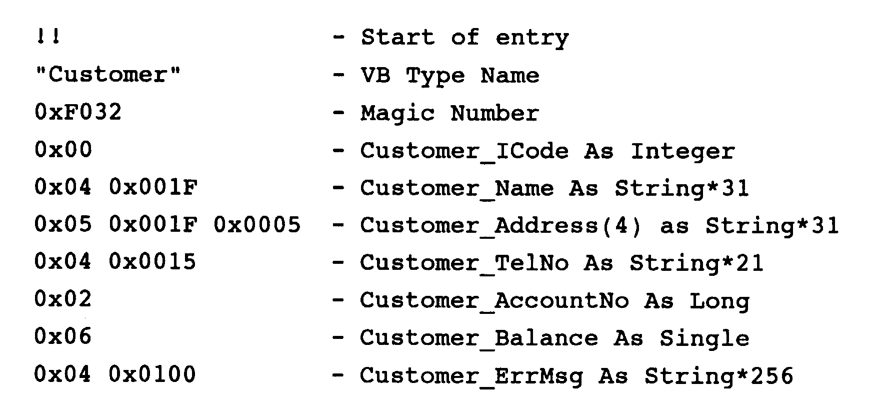

(In the above, "0x" indicates a hexadecimal number. The comments on the right, following the "-" do not form part of the file).

It should be noted that the runtime support file is very compact: in the "Customer.tvb" example, the file occupies only 30 bytes, compared with the 473 bytes occupied by the corresponding Visual Basic Type.

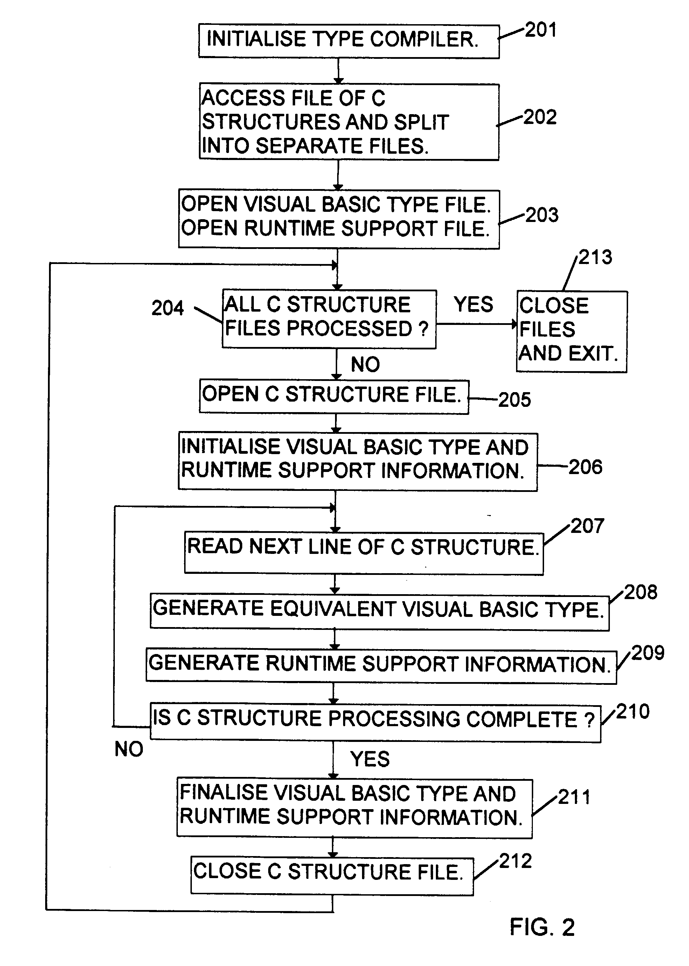

Figure 2 is a flowchart showing the operation of the type compiler 14 when processing a particular C header file.

First, the type compiler initialises itself (step 201). The C header file 13 is accessed and split into a number of separate files, one for each C structure specified by the header file (step 202). A Visual Basic Type file 15 and runtime support file 16 are opened (step 203).

If all the C structure files have not yet been processed (step 204), the next C structure file is now opened (step 205). The Visual Basic Type and runtime support information are initialised (step 206). The first line of the C structure file is read (step 207), the equivalent Visual Basic Type is generated (step 208), and the corresponding runtime support information is generated (step 209). If there are more lines in the C structure file for processing (step 210), the type compiler returns to step 207, to read the next line.

When all the lines in the C structure file have been processed, the Visual Basic Type and the runtime support information are finalised (step 211), and the C structure file is closed (step 212). The compiler then returns to step 204 above, to process the next C structure file, if any. When all the C structure files have been processed, all files are closed and the compiler exits (step 213).

### Conversion functions.

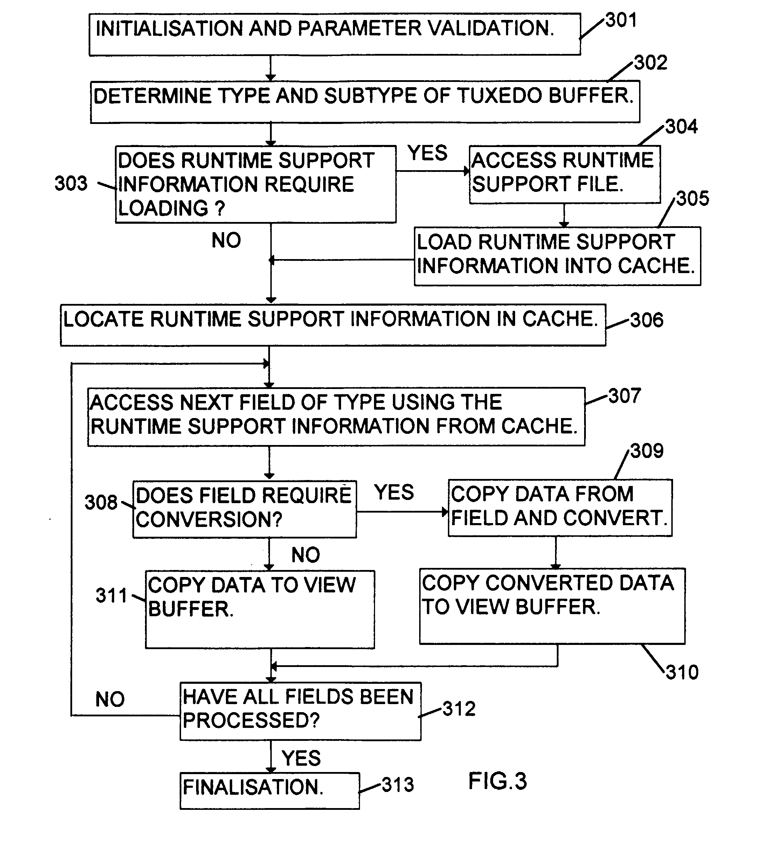

Figure 3 is a flowchart showing the operation of the type conversion function 19 which copies and converts a specified Visual Basic Type to a specified TUXEDO buffer.

The function first initialises itself and validates its parameters (step 301), and determines the type and subtype of the TUXEDO buffer (step 302). It then checks whether the runtime support information for the specified Visual Basic Type requires loading (step 303). If so, the information is accessed (step 304) and loaded into a cache (step 305). In other words, the function caches the runtime support information the first time it is accessed, so that it can subsequently be accessed very rapidly. Hence, the function has a relatively small memory access time overhead.

The function then locates the required runtime support information entry in the cache, using the "!!" code to identify the start of each entry (step 306). It then uses the runtime support information entry to access the first field of the Visual Basic Type (step 307), and to check whether the field requires conversion (step 308). If conversion is required, the data is copied from the field and converted, making use of the runtime support information to identify the necessary data conversions (step 309). The converted data is then copied into the specified TUXEDO view buffer (step 310). If, on the other hand, no conversion is required, the data is simply copied into the specified TUXEDO view buffer (step 311).

If all the fields of the Visual Basic Type have now been processed (step 312), the function performs a finalisation step (step 313) and exits. Otherwise, the function returns to step 307 above, to access the next field.

The buffer conversion function 20, which performs the reverse conversion, is similar and need not be described any further.

### Visual Basic Application

The operation of the Visual Basic application 11 will now be described.

The Visual Basic Types in the file 15 are included into the Visual Basic application. The application can therefore declare instances of these Types. It also declares one or more Long variables to hold addresses returned by TUXEDO.

The Visual Basic application can then call the TUXEDO **tpalloc** routine, to allocate a VIEW buffer, assigning the result to the Long variable.

The Visual Basic application can then manipulate any of the Visual Basic Type instances as follows:
i) Update the Visual Basic Type instance, by writing data into it.
ii) Call the type conversion function 19 to copy the Visual Basic Type instance to the VIEW buffer, performing any necessary data conversion.
iii) Call a TUXEDO routine e.g. **tpcall** to process the data in the VIEW buffer.
iv) Call the buffer conversion function 20 to copy the return buffer to the Visual Basic Type instance, performing any necessary data conversion.
v) Manipulate the Visual Basic Type instance.

### Some possible modifications

It will be appreciated that many modifications may be made to the system described above without departing from the scope of the present invention. For example, instead of conversions between C structures and Visual Basic Types, other forms of conversion may be performed, such as conversion between C structures and PASCAL records.

## Claims

1. A computer system comprising;
(a) first and second software components;
(b) a first data structure definition file, representing a data structure from the point of view of said first software component;
(c) means for processing the first structure definition file to generate a second structure definition file representing said data structure from the point of view of said second software component, and at the same time to generate a compact coded representation of said data structure; and
(d) conversion means for converting an instance of said data structure represented by said first structure definition file into an instance of said data structure represented by said second structure definition file, and vice versa, using said compact coded representation to control the conversion.

2. A computer system according to Claim 1 wherein said compact coded representation of said data structure comprises a sequence of information items, each of said information items comprising a type code representing a data type.

3. A computer system according to Claim 1 or 2 wherein said first application is a C language application.

4. A computer system according to Claim 3 wherein said first structure definition file contains at least one C language structure declaration.

5. A computer system according to any preceding claim wherein said second application is a Visual Basic application.

6. A computer system according to Claim 5 wherein said second structure definition file contains at least one Visual Basic Type.

7. A computer system comprising;
(a) a first software component utilising a first language that requires a first data format;
(b) a second software component utilising a second language that requires a second data format;
(c) a first data structure definition file, representing a data structure in said first data format;
(d) means for processing the first structure definition file to generate a second structure definition file representing said data structure in said second data format, and at the same time to generate a compact coded representation of said data structure; and
(e) conversion means for converting an instance of said data structure represented by said first structure definition file into an instance of said data structure represented by said second structure definition file, and vice versa, using said compact coded representation to control the conversion.

8. A computer system according to Claim 7 wherein said compact coded representation of said data structure comprises a sequence of information items, each of said information items comprising a type code representing a data type.

9. A computer system according to Claim 8 wherein said first structure definition file contains at least one C language structure declaration and wherein said second structure definition file contains at least one Visual Basic Type.
